(19) **Europäisches Patentamt**

**European Patent Office**

**Office européen des brevets**

(11) **EP 0 763 916 B1**

(12) **EUROPÄISCHE PATENTSCHRIFT**

(45) Veröffentlichungstag und Bekanntmachung des Hinweises auf die Patenterteilung:
**22.01.2003  Patentblatt 2003/04**

(51) Int Cl.⁷: **H04L 25/02**

(21) Anmeldenummer: **96113895.5**

(22) Anmeldetag: **30.08.1996**

(54) **Empfängerschaltung mit konstantem Eingangswiderstand**

Receiver circuit with constant input impedance

Circuit de réception à impédance d'entrée constante

(84) Benannte Vertragsstaaten:
**DE FR GB IT**

(30) Priorität: **08.09.1995  DE 19533274**

(43) Veröffentlichungstag der Anmeldung:
**19.03.1997  Patentblatt 1997/12**

(73) Patentinhaber: **DEUTSCHE THOMSON-BRANDT GMBH**
**78048 Villingen-Schwenningen (DE)**

(72) Erfinder: **Rau, Martin**
**81479 München (DE)**

(56) Entgegenhaltungen:
**WO-A-89/02201          US-A- 3 972 003**

- **PATENT ABSTRACTS OF JAPAN vol. 017, no. 691 (E-1479), 17. Dezember 1993 (1993-12-17) & JP 05 235649 A (NEC ENG LTD), 10. September 1993 (1993-09-10)**
- **RAU M ET AL.: "RECEIVER WITH CONSTANT ACTIVE TERMINATION " 996 SYMPOSIUM ON VLSI CIRCUITS. DIGEST OF TECHNICAL PAPERS, 13. - 15. Juni 1996, Seiten 140-141, XP002142346 honolulu US**

**Beschreibung**

Die Erfindung betrifft eine elektronische Schaltung zum Empfangen und/oder Verarbeiten von Signalen, insbesondere digitalen Signalen, gemäß dem Oberbegriff des Anspruchs 1.

Aufgrund des technischen Fortschritts in der Signalverarbeitung und bei der Integration elektronischer Schaltteile bzw. Schaltungen, sind zwischen derartigen Schaltungen immer mehr Digitalsignale mit immer höheren Taktfrequenzen zu übertragen. Das bedeutet, daß zur störungsfreien Übertragung hochfrequenter Signale der Empfänger mit dem Wellenwiderstand der Übertragungsleitung abgeschlossen werden muß, da andernfalls Kabelreflektionen auftreten können, die eventuell Störungen hervorrufen, wobei der Wellenwiderstand zwischen 30 und 300 Q liegt. Beispielsweise liegt der Wellenwiderstand bei Verbindungen zwischen Chips auf einfachen zweiseitigen Platinen, die relativ preisgünstig sind, zwischen 80 - 120 Ohm, während er bei Platinen in Multilayertechnik zum Verbinden von auf der Platine aufgebrachten Chips bei ca 50 Ohm liegt. Der einfachste Fall eines derartigen Abschlusses einer Wellenleitung wird durch einen entsprechend genauen Festwiderstand gebildet, der dem Wellenwiderstand entspricht. Nun ist es, bedingt durch die Fertigungstechnik, nicht möglich, auf oder innerhalb eines ICs einen entsprechend präzisen Widerstand auszubilden, da die fertigungsbedingten Toleranzen bei der Herstellung eines Widerstands auf einem Chip zu groß sind.

Aufgrund des relativ geringen Leitungswiderstandes ist der ankommende Spannungssignalpegel relativ klein. Mittels einer Transistorbasisschaltung wird der empfangene Signalstrom, der auf den Emitter gegeben wird, direkt zur Verstärkung verwendet und die Basisschaltung erzeugt weiterhin den Eingangswiderstand in der entsprechend geringen Größenordnung. Eine derartige Basisschaltung ist beispielsweise aus Kawamura et al., "An Extremely Low-power Bipolar Current-mode I/O Circuit for Multi-Gbit/s Interfaces", Symposium on VLSI Circuits Digest of Technical Papers 1994, Seiten 31 - 32, und Murabayashi, F. et al.: "3.3-V BiCMOS Circuit Techniques for a 120-MHz RISC Microprocessor", Journal of Solid-State Circuits, März 1994, Seiten 298 - 302, bekannt. Dort wird ein Transistor in Basisschaltung am Eingang angeordnet, dessen Basis über eine konstante Spannungsquelle auf einer konstanten Spannung gehalten wird. Mittels eines Lastwiderstands im Kollektorkreis wird aufgrund des Kollektorstroms des Transistors eine Ausgangssignal erzeugt, das in einer nachfolgenden Schaltung verarbeitet wird.

Aus der WO 89/02201 A ist ein Digitaldatenübertragungssystem mit einer Empfängerschaltung bekannt, deren Eingangsimpedanz an den Wellenwiderstand der die Empfängerschaltung mit Datensignalstrom speisenden Verbindungsleitung angepasst ist. Hierzu weist die Empfängerschaltung eine Serienschaltung auf aus einem in Basisschaltung betriebenen Transistor und einem Transistor, dessen Kollektor-Emitterstrecke zwischen Betriebsspannungspotential und dem Emitter des in Basisschaltung betriebenen Transistors geschaltet ist, wobei der Emitter dieses Transistors den Datensignaleingang der Empfängerschaltung bildet.

Die Vorteile der Basisschaltung liegen in ihrem kleinen Eingangswiderstand und ihrer hohen Grenzfrequenz.

Nachteilig bei der Basisschaltung ist ihr vom Stromfluß abhängiger und deshalb nicht vollständig konstanter Eingangswiderstand.

Der Erfindung liegt daher die Aufgabe zugrunde, eine Empfängerschaltung mit konstantem Eingangswiderstand zu schaffen.

Die Aufgabe wird durch den Gegenstand der Erfindung gemäß Anspruch 1 gelöst. Vorteilhafte Weiterbildungen der Erfindung sind in den Unteransprüchen angegeben.

Die Erfindung wird nachfolgend anhand mehrerer Ausführungsbeispiele unter Bezugnahme auf die Zeichnungen näher erläutert, wobei:

Fig. 1 das Schaltbild einer ersten Ausführungsform der Erfindung unter Verwendung eines Transistors und dessen dazu Komplementären zeigt,

Fig. 2 eine zweite bipolare Ausführungsform der Erfindung mit identischen Transistoren zeigt,

Fig. 3 eine dritte Ausführungsform der Erfindung unter Verwendung von MOS-Transistoren zeigt,

Fig. 4 eine Schaltung entsprechend der Fig. 3 mit einem zusätzlichen Verstärkerteil zeigt,

Fig. 5 eine Schaltung gemäß Fig. 2 oder 3 zeigt, die um einen Symmetriezweig erweitert ist, und

Fig. 6 eine bekannte Basisschaltung darstellt.

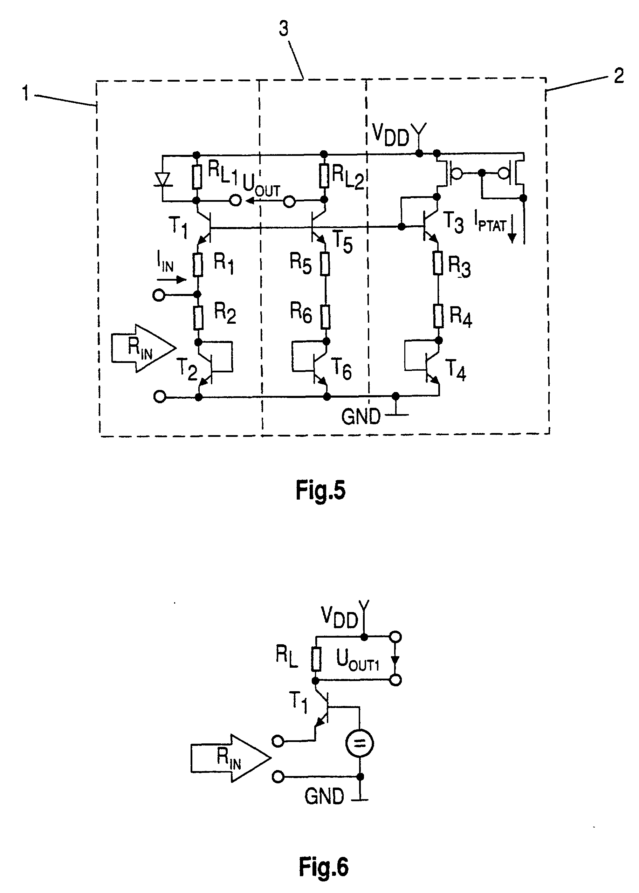

Die Fig. 6 zeigt die bekannte Basisschaltung bestehend aus einem Transistor $T_1$ und einem in dem Kollektorkreis geschalteten Lastwiderstand $R_L$, an dem das Signal $U_{OUT1}$ abgegriffen wird. Der zwischen Emitter und Basis auftretende Eingangswiderstand $R_{IN}$ ist zwar klein, aber vom Stromfluß abhängig, und daher nicht konstant. Die Basis des Transistors $T_1$ wird von einer Konstantspannungsquelle mit konstanter Spannung versorgt.

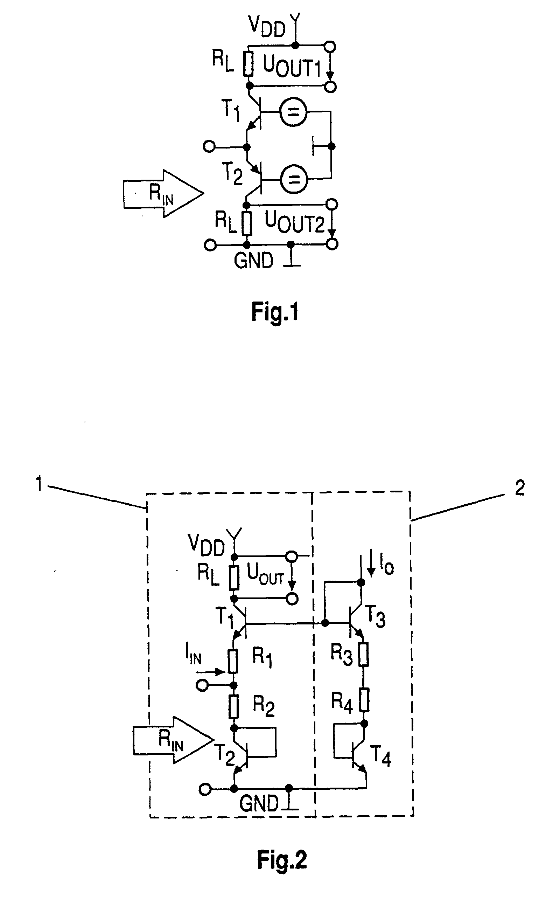

Die Fig. 1 zeigt eine erste Ausführungsform der Erfindung, worin die bekannte Basisschaltung um eine dazu komplementäre Basisschaltung erweitert ist, so daß an dem oberen Lastwiderstand $R_L$ und dem unteren Lastwiderstand $R_L$ jeweils die Ausgangsspannung $U_{OUT1}$ und die dazu inverse $U_{OUT2}$, abgegriffen werden kann. Die Schwankungen des Eingangswiderstandes in der durch den Transistor $T_1$ gebildeten obe-

ren Basisschaltung werden durch gegenläufige Schwankungen in der dazu komplementären Schaltung mit dem Transistor $T_2$ ausgeglichen, so daß sich die Einflüsse überlagern und die Stromabhängigkeit des Eingangswiderstands $R_{IN}$ für einen bestimmten Eingangsstrom exakt verschwindet und für kleine Aussteuerungen zumindest näherungsweise konstant ist.

Da die beiden Ausgänge $U_{OUT1}$ und $U_{OUT2}$ identische Signale liefern, ist einer der Ausgänge unnötig. Man kann daher den dazugehörigen Arbeitswiderstand, in diesem Falle $R_{L2}$, entfernen und vergrößert damit gleichzeitig den am anderen Ausgang möglichen Spannungshub und entsprechend die Verwendbarkeit der Schaltung bei reduzierten Versorgungsspannungen. Da der NPN-Transistor technologisch bedingt dem PNP überlegen ist, verzichtet man lieber auf den Ausgang $U_{OUT2}$ im unteren Teil der Fig. 1. Dann ist es weiterhin möglich, statt eines isolierten PNP-Transistors den weitaus einfacher und billiger herstellbaren Substrat-PNP einzusetzen.

Fig. 2 zeigt eine zweite Ausführungsform der Erfindung. Durch die Verwendung des komplementären PNP-Transistors $T_2$ in der Schaltung entsprechend der Fig. 1 wird zwar der Gleichstromeingangswiderstand verbessert, der Frequenzbereich der Schaltung wird aber aufgrund der geringeren Transitfrequenz des PNP-Transistors reduziert. Daher ist in der Schaltung gemäß Fig. 2 der komplementäre Transistor $T_2$ durch einen Transistor $T_2$ ersetzt, der identisch mit dem Transistor $T_1$ ist, d.h. vom gleichen Typ, was durch den Wegfall des unteren Lastwiderstandes $R_L$ möglich ist, da die Strom-Spannungscharakteristik des Basis-Emitterkreises ohne einen Lastwiderstand für PNP- und NPN-Transistoren die gleiche ist. Weiterhin ist für die Funktion der Basisschaltung die transistorspezifische Strom-Spannungscharakteristik zwischen dem Eingangsknoten und einem konstanten Potential an der Basis ausschlaggebend. Da der Kollektor nun auf einem konstanten Potential liegt, kann diese Funktion ebenso von dem als Diode geschalteten NPN-Transistor $T_2$ realisiert werden, so daß die Basis des Transistors $T_2$ nunmehr auf dem Kollektorpotential liegt. Weiterhin ergibt die Verwendung von identischen Transistortypen für die Transistoren $T_1$ und $T_2$ ein symmetrisches Schaltungsverhalten. Die in der Fig. 2 dargestellte bipolare Variante ist aufgrund der hohen Steilheit der Transistoren besonders für kleine Signale (ungefähr 100 mV) geeignet. Sie ermöglicht eine sehr leistungsarme Datenübertragung, erfordert aber auch entsprechend geringe Störungen oder eine Abschirmung von den Störungen.

Zum Erzielen eines konstanten Eingangswiderstandes benötigt man zwei symmetrisch liegende geeignete Gegenkopplungswiderstände $R_1$, $R_2$. Die Größe des Gesamtgegenkopplungswiderstandes bestehend aus dem Gegenkopplungswiderstand $R_1$, $R_2$ und den parasitären Transistorwiderständen beträgt ungefähr 2/3 des Eingangswiderstandes $R_{IN}$, wie analytisch gezeigt werden kann (nicht dargestellt). D.h. der tatsächliche zu verwendende Gegenkopplungswiderstand $R_1$, $R_2$ muß die parasitären Widerstände berücksichtigen. Der Eingangswiderstand dieser Schaltung ist nahezu konstant, wenn beide Transistoren etwa gleich dimensioniert sind. Aufgrund der Schaltungssymmetrie ist die Kennlinie des differentiellen Eingangswiderstandes unter Vernachlässigung der Effekte zweiter Ordnung, wie z.B. des "Early-Effekts", näherungsweise symmetrisch mit dem Eingangsstrom um den Arbeitspunkt $I_{IN}$ = 0. Da Transistoren im Regelfall kein ideales Verhalten zeigen, ist die Symmetrie aufgrund Effekte zweiter Ordnung nicht vollständig. Werden die Gegenkopplungswiderstände $R_1$ und $R_2$ etwas ungleich voneinander gewählt, so können die Effekte zweiter Ordnung reduziert werden, wodurch sich die Symmetrie der Kennlinie erhöht.

Für den Betrieb der erfindungsgemäßen Schaltung muß die Spannung der Basis des Transistors $T_1$ konstantgehalten werden. Dazu wird ein konstanter Ruhestrom $I_0$ in eine Kopie der Schaltung, dem Spiegelzweig 2 eingeprägt. Diese Kopie 2 des Signalzweigs 1 umfaßt die Transistoren $T_3$ und $T_4$, die den Transistoren $T_1$ und $T_2$ entsprechen, sowie die Widerstände $R_3$ und $R_4$, die den Gegenkopplungswiderständen $R_1$ und $R_2$ entsprechen. Der Spiegelzweig 2 liegt parallel zum Signalzweig 1, wobei die beiden Basen der Transistoren $T_1$ und $T_3$ der beiden Zweige 1, 2 miteinander verbunden sind. Beide Zweige liegen auf dem gleichen unteren Potential GND. Oben liegen die Zweige auf einem oberen Potential $V_{DD}$, das im Punkt Y zugeführt wird. Durch den Basis-Kollektorkurzschluß des Transistors $T_3$ des Spiegelzweiges 2 liegt die Basis des Transistors $T_1$ auf einer konstanten Spannung.

Der Wert des Eingangswiderstandes ist eine Funktion des eingeprägten Ruhestroms $I_0$ und des Gegenkopplungswiderstandes $R_1$, $R_2$, wobei die Ruhestromeinstellung $I_0$ unabhängig von Bauteiletoleranzen nach dem bereits erwähnten Stromspiegelprinzip erfolgt. Nach Fertigstellung der Schaltung, d.h. nach Abschluß des Herstellungsprozesses, können die Werte ohne Abweichen von der optimalen Funktion nicht verändert werden.

Bei der bipolaren Schaltung gemäß der Fig. 2 muß aufgrund des Temperaturverhaltens der Transistoren zur Realisierung eines konstanten Eingangswiderstands der Ruhestrom $I_0$ proportional zur absoluten Temperatur sein. Die Erzeugung eines Stromes, der proportional zur absoluten Temperatur ist, ist unter dem Stichwort "PTAT"-Stromquelle bekannt und braucht daher hier nicht erläutert werden.

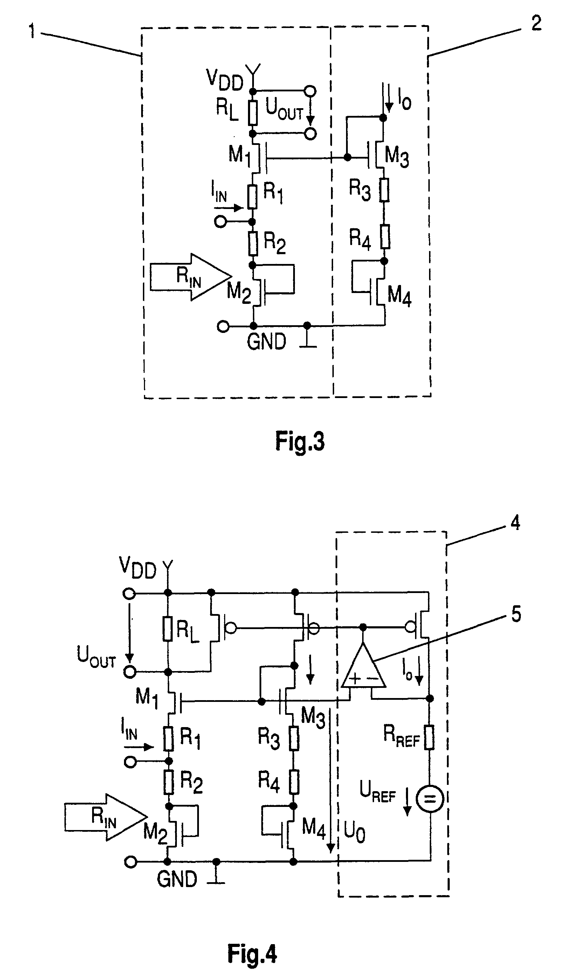

Fig. 3 zeigt eine dritte Ausführungsform der erfindungsgemäßen Schaltung, wobei MOS-Transistoren $M_1$, $M_2$, $M_3$, $M_4$ anstelle der bipolaren Transistoren $T_1$, $T_2$, $T_3$, $T_4$ verwendet werden. Das Schaltungsprinzip ist dabei identisch mit der bipolaren Variante nach der Fig. 2. Ebenso wie bei der Schaltung nach der Fig. 2 umfaßt die MOS-Variante die Transistoren $M_1$ und $M_2$ in Gate-Schaltung, wobei auch hier die Einprägung des kon-

stanten Ruhestroms $I_0$ durch eine Kopie der Schaltung erzielt wird. Die als Spiegelzweig 2 bezeichnete Kopie des Signalzweigs 1 umfasst die Transistoren $M_3$ und $M_4$, sowie die Gegenkopplungswiderstände $R_3$ und $R_4$. Die Gegenkopplungswiderstände $R_1$ und $R_2$, die in der Fig. 3 dargestellt sind, sind bei der MOS-Variante nicht unbedingt notwendig und können daher entfallen. Entfallen diese, so müssen auch die entsprechenden Widerstände des Spiegelzweigs entfallen. Allerdings stellen die Gegenkopplungswiderstände einen gewissen Schutz für die kritische Gate-Sourceverbindung des Transistors $M_2$ dar, da das Gate des Transistors $M_2$ direkt mit dem Signaleingang verbunden ist. Ebenso gilt für die MOS-Schaltung nicht der Zusammenhang $R_1 \sim 2/3\ R_{IN}$. Durch die Einfügung ungleicher Gegenkopplungswiderstände können auch bei der MOS-Variante die Effekte zweiter Ordnung annähernd ausgeglichen und die Symmetrie der Schaltung erhöht werden.

Fig. 4 zeigt die Schaltung der Fig. 3 erweitert um einen Verstärkerzweig. Wegen der fertigungstechnisch bedingten starken Schwankung der Parameter der MOS-Transistoren $M_1$ und $M_2$, müssen bei der MOS-Schaltung zusätzliche Maßnahmen, d.h. der zusätzliche Verstärkerzweig, ergriffen werden. Der schematisch gezeichnete Verstärker regelt den Ruhestrom so, daß die Gleichung $U_0 = U_{REF} + R_{REF} \cdot I_0$ erfüllt wird. Mit diesem linearen Ansatz kann der Einfluß der Parameter der NMOS-Transistoren auf den Eingangswiderstand $R_{IN}$ gut kompensiert werden. Zur Temperaturkompensation muß $U_{REF}$ mit steigender Temperatur abnehmen. Die Realisierung des Verstärkers kann mit einem gewöhnlichen Operationsverstärker geschehen. Die dargestellte Schaltung hängt prinzipiell weder von den PMOS-Parametern noch von der Versorgungsspannung ab. Zur Reduktion der Leistungsaufnahme können die Ruheströme der Regelung im Verstärker und im Referenzzweig sehr klein gewählt werden, da keine schnellen Änderungen ausgeglichen werden müssen. Durch die dem Lastwiderstand parallelgeschaltete Stromquelle, die proportional $I_0$ ist, kann die Spannungsverstärkung der Stufe wiederum höher gewählt werden.

Fig. 5 zeigt eine symmetrische Erweiterung der Schaltung gemäß der Fig. 2 um einen Referenzzweig 3, der dem Signalzweig 1 identisch ist, und zwischen diesem und dem Spiegelzweig 2 angeordnet ist. Der Symmetriezweig 3 umfaßt wie der Signalzweig 1 einen Lastwiderstand $R_L$, einen oberen Transistor $T_5$ in Basisschaltung, zwei Gegenkopplungswiderstände $R_5$, $R_6$ und einen als Diode geschalteten unteren Transistor $T_6$. Die Basis des Transistors $T_5$ wird durch den Spiegelzweig 2 auf einem konstanten Potential gehalten. Durch den Referenzzweig fließt immer der eingeprägte Strom $I_0$ des Spiegelzweigs 2, da der Referenzzweig 3 keinen Signaleingang aufweist. Das Ausgangssignal $U_{OUT}$ dieser Schaltung wird nun zwischen den Kollektoren der Transistoren $T_1$ und $T_5$ abgenommen, die über Lastwiderstände $R_{L1}$ und $R_{L2}$ mit dem oberen Potential

$V_{DD}$ verbunden sind. Die Wirkung ist die folgende:

Ohne einen Signaleingangsstrom $I_{IN}$ ist das Ausgangssignal $U_{OUT}$ Null, da sowohl der Signalzweig 1 als auch der Referenzzweig 3 vom Ruhestrom $I_0$ durchflossen wird und folglich beide Anschlüsse auf gleichem Potential liegen. Bei einem positiven Signaleingangsstrom $I_{IN}$ wird der Strom durch den Transmitter $T_1$ kleiner, wodurch die Spannung an $R_{L1}$ abnimmt. Die Spannung an $R_{L2}$ bleibt aber bestehen, wodurch die Ausgangsspannung $U_{OUT}$ negativ wird. Bei einem negativen Signaleingangsstrom drehen sich die entsrechenden Verhältnisse um, so daß sich das Vorzeichen von $U_{OUT}$ entsprechend umkehrt und die Ausgangsspannung $U_{OUT}$ positiv wird.

Mit anderen Worten, das Ausgangssignal $U_{OUT}$ ist symmetrisch zu dem vom Referenzzweig gebildeten Referenzpotential "Null". Da die erfindungsgemäße Empfängerschaltung nach Fig. 5 nur den Strom auswertet, ist die Technik des Senders (nicht dargestellt) unwesentlich, d.h. der Sender kann beispielsweise in MOS-Technik aufgebaut sein, während der Empfänger bipolar ist. Weiterhin hat die Art der Versorgungsspannungs des Senders (z.b. 5V, 3V oder 2V) keinen Einfluß und das GND-Potential des Senders kann innerhalb gewisser Grenzen von dem GND-Potential des Empfängers verschieden sein, ohne daß dies einen Einfluß auf die Signalverarbeitung hat, solange die Differenz der verschiedenen GND-Potentiale zeitlich nicht schwankt, d.h. es keinen "Brumm" zwischen den Potentialen gibt. Bedingt durch die Stromauswertung wird nur eine Leitung benötigt, da Potentialdifferenzen zwischen den GND-Potentialen auftreten dürfen. Man kann daher die Schaltung auch als Interface zwischen Schaltungen mit verschiedenen Versorgungsspannungen verwenden.

Allgemein können die beschriebenen Schaltungen für eine Chip-to-Chip-Verbindung, für Verbindungen auf (d.h. innerhalb) einem Chip und für analoge Schaltungen verwendet werden. Die beschriebenen Zweige, d.h. der Signalzweig, der Spiegelzweig und der Referenzzweig, der Ausführungsformen der erfindungsgemäßen Schaltung müssen fertigungstechnisch identisch sein. Dabei ist es wichtig, daß jeweils die oberen und die unteren Transistoren, sowie jeweils die oberen und die unteren Gegenkopplungswiderstände identisch sind. Dagegen können die oberen Transistoren von den unteren Transistoren und entsprechend die oberen Gegenkopplungswiderstände von den unteren Gegenkopplungswiderständen zur Erhöhung der Symmetrie der Schaltung abweichen, wie dies im Vorangegangenen diskutiert ist.

Bezugszeichenliste

1          Signalzweig
2          Spiegelzweig

| 3 | Referenzzweig |
|---|---|
| 4 | Verstärker |
| 5 | Operationsverstärker |
| $R_{IN}$ | Eingangswiderstand |
| $I_{IN}$ | Signaleingangsstrom |
| $T_1, M_1$ | oberer Transistor |
| $T_2, M_2$ | unterer Transistor |
| $T_3, M_3$ | oberer Transistor |
| $T_4, M_4$ | unterer Transistor |
| $T_5, M_5$ | oberer Transistor |
| $T_6, M_6$ | unterer Transistor |
| $R_L, R_{L1}, R_{L2}$ | Lastwiderstände |
| $R_1 - R_6$ | Gegenkopplungswiderstände |
| $I_0$ | Ruhestrom |
| $U_{OUT}$ | Ausgangssignal |
| $V_{DD}$ | oberes Potential |
| GND | unteres Potential |
| $U_{REF}$ | Referenzspannung |
| $R_{REF}$ | Referenzwiderstand |

**Patentansprüche**

1.  Empfängerschaltung mit konstantem Eingangswiderstand, die einen oberen in Basisschaltung bzw. Gateschaltung betriebenen Transistor ($T_1$, $M_1$), einen zwischen dessen Kollektor bzw. dessen entsprechender Feldeffekttransistorelektrode und einem oberen Potential ($V_{DD}$) angeordneten Lastwiderstand ($R_L$) zum Erzeugen eines Ausgangssignals ($U_{OUT1}$, $U_{OUT}$) und einen unteren Transistor ($T_2$, $M_2$) aufweist, wobei die Emitter-Kollektorstrecke bzw. Source-Drainstrecke des unteren Transistors ($T_2$, $M_2$) zwischen dem oberen Transistor ($T_1$, $M_1$) und einem unteren Potential (GND) angeordnet ist und mit dem Emitter bzw. der entsprechenden Feldeffekttransistorelektrode des oberen mit konstanter Basisspannung bzw. Gatespannung versorgten Transistors ($T_1$, $M_1$) der Signaleingang ($I_{IN}$) der Empfängerschaltung gebildet wird, **dadurch gekennzeichnet, dass** die beiden Transistoren ($T_1$, $T_2$; $M_1$, $M_2$) identisch sind und der zweite Transistor ($T_2$, $M_2$) als Diode geschaltet ist.

2.  Schaltung nach Anspruch 1, **dadurch gekennzeichnet, dass** zwischen oberem und unterem Transistor ($T_1$, $M_1$; $T_2$, $M_2$) zwei Gegenkopplungswiderstände ($R_1$, $R_2$) geschaltet sind, wobei der Signaleingang ($I_{IN}$) zwischen den Gegenkopplungswiderständen ($R_1$, $R_2$) liegt.

3.  Schaltung nach Anspruch 2, **dadurch gekennzeichnet, dass** die Reihenfolge des zweiten Transistors ($T_2$, $M_2$) und des zweiten Gegenkopplungswiderstands ($R_2$) vertauscht ist.

4.  Schaltung nach Anspruch 3, **dadurch gekennzeichnet, dass** die Schaltung zu ihrem Signalzweig (1) einen Spiegelzweig (2) nach dem Stromspiegelprinzip aufweist, der mit einem oberen - und einem unteren Transistor ($T_3$, $M_3$; $T_4$, $M_4$) und zwei Gegenkopplungswiderständen ($R_3$, $R_4$) eine Schaltungskopie des Signalzweiges (1) ist und in den ein konstanter Ruhestrom ($I_0$) zur Konstanthaltung der Basisspannung bzw. Gatespannung des oberen Transistors ($T_1$, $M_1$) eingeprägt wird.

5.  Schaltung nach einem der Ansprüche 2 bis 4, **dadurch gekennzeichnet, dass** bei Verwendung bipolarer Transistoren ($T_1$, ($T_2$) die Gegenkopplungswiderstände ($R_1$, $R_2$) gleich groß sind.

6.  Schaltung nach einem der Ansprüche 2 bis 4, **dadurch gekennzeichnet, dass** die beiden Gegenkopplungswiderstände ($R_1$, $R_2$) sich im Betrag voneinander unterscheiden.

7.  Schaltung nach Anspruch 5 oder 6, **dadurch gekennzeichnet, dass** der Gegenkopplungswiderstand ($R_1$) etwa 2/3 des Eingangswiderstands ($R_{IN}$) beträgt.

8.  Schaltung nach einem der Ansprüche 5 bis 7, **dadurch gekennzeichnet, dass** der Ruhestrom ($I_0$) von einer "PTAT"-Stromquelle erzeugt wird, so dass der Ruhestrom ($I_0$) proportional zur absoluten Temperatur ist.

9.  Schaltung nach Anspruch 2, **dadurch gekennzeichnet, dass** bei Verwendung von MOS-Transistoren ($M_1$, $M_2$) die Gegenkopplungswiderstände ($R_1$, $R_2$) entfallen können.

10. Schaltung nach Anspruch 9, **dadurch gekennzeichnet, dass** die Schaltung einen zusätzlichen Verstärker (4) mit einem Referenzwiderstand ($R_{REF}$) und einer Referenzspannung ($U_{REF}$) aufweist, der den Ruhestrom ($I_0$) so regelt, dass die Gleichung

$$U_0 = U_{REF} + R_{REF} \times I_0$$

erfüllt ist.

11. Schaltung nach Anspruch 10, **dadurch gekennzeichnet, dass** der zusätzliche Verstärker (4) einen Differenzverstärker (5) aufweist.

12. Schaltung nach einem der vorangegangenen Ansprüche, **dadurch gekennzeichnet, dass** eine weitere Kopie des Signalzweigs (1) als Referenzzweig (3) zwischen Signalzweig (1) und Spiegelzweig (2) angeordnet ist, der aus zwei weiteren Transistoren ($T_5$, $T_6$) und zwei zwischen diesen Transistoren ($T_5$, $T_6$) angeordneten Widerständen

($R_5$, $R_6$) besteht, wobei die Basis des oberen Transistors ($T_5$) des Referenzzweigs (3) auf konstanter Spannung gehalten wird und das Ausgangssignal ($U_{OUT}$) zwischen den beiden Kollektoren der oberen Transistoren ($T_1$, $T_5$) des Signal- und Referenzzweigs (1, 3) abgenommen wird, die jeweils über einen Lastwiderstand ($R_{L1}$, $R_{L2}$) auf dem oberen Potential (VDD) liegen.

**Claims**

1. Receiver circuit with constant input impedance including an upper transistor ($T_1$, $M_1$) operated in common base mode or common gate mode, respectively, a load resistor (RL) connected between its collector or its corresponding field effect transistor electrode, respectively, and an upper potential ($V_{DD}$), for producing an output signal ($U_{OUT1}$, $U_{OUT}$) and a lower transistor ($T_2$, $M_2$) wherein the collector/emitter-path or the source/drain path, respectively, of the lower transistor ($T_2$, $M_2$) is arranged between the upper transistor ($T_1$, $M_1$) and a lower potential (GND) and wherein the signal input ($I_{IN}$) of the receiver circuit is formed by the emitter and the corresponding field effect transistor electrode, respectively, of the upper transistor ($T_1$, $M_1$) supplied with constant basis voltage or gate voltage, respectively, **characterized in that** both transistors ($T_1$, $T_2$; $M_1$, $M_2$) are identical and the second transistor ($T_2$, $M_2$) is connected as diode.

2. Circuit according to claim 1, **characterized in that** two negative-feedback resistors ($R_1$, $R_2$) are connected between the upper and the lower transistor ($T_1$, $T_2$, $M_1$, $M_2$), the signal input ($I_{IN}$) being located between the two negative-feedback resistors ($R_1$, $R_2$).

3. Circuit according to claim 2, **characterized in that** the sequencing of the second transistor ($T_2$, $M_2$) and of the second negative-feedback resistor ($R_2$) is interchanged.

4. Circuit according to claim 3, **characterized in that** the circuit includes to its signal branch (1) a mirror branch (2) according to the current-mirror principle which is a copy of the circuit of the signal branch with an upper and a lower transistor ($T_3$, $M_3$, $T_4$, $M_4$) and two negative-feedback resistors ($R_3$, $R_4$), and into which a constant quiescent current ($I_0$) is impressed for holding constant the base voltage and the gate voltage, respectively, of the upper transistor ($T_1$, $M_1$).

5. Circuit according to anyone of the preceding claims 2 to 4, **characterized in that** with the employment

of bipolar transistors ($T_1$, $T_2$) the negative-feedback resistors ($R_1$, $R_2$) have the same resistance.

6. Circuit according to anyone of claims 2 to 4, **characterized in that** the two negative-feedback resistors ($R_1$, $R_2$) differ from each other.

7. Circuit according to claim 5 or 6, **characterized in that** the negative-feedback resistor ($R_1$) is approximately equal to 2/3 of the input resistor ($R_{IN}$).

8. Circuit according to one of claims 5 to 7, **characterized in that** the quiescent current ($I_O$) is produced by a "PTAT" current source, so that the quiescent current ($I_O$) is proportional to the absolute temperature.

9. Circuit according to claim 2, **characterized in that** with the employment of MOS-transistors ($M_1$, $M_2$) the negative-feedback resistors ($R_1$, $R_2$) may be omitted.

10. Circuit according to claim 9, **characterized in that** the circuit has an additional amplifier (4) with a reference resistor ($R_{REF}$) and a reference voltage ($U_{REF}$), which controls the quiescent current ($I_O$) such that the equation

$$U_O = U_{REF} + R_{REF} \cdot I_O$$

is satisfied.

11. Circuit according to claim 10, **characterized in that** the additional amplifier (4) exhibits a differential amplifier (5).

12. Circuit according to one of the preceding claims, **characterized in that** a further copy of the signal branch (1) is arranged between the signal branch (1) and the mirror branch (2) as a reference branch (3) which consists of two further transistors ($T_5$, $T_6$) and two resistors ($R_5$, $R_6$) arranged between said transistors ($T_5$, $T_6$), the base of the upper transistor ($T_5$) of the reference branch (3) being kept at constant voltage and the output signal ($U_{OUT}$) being tapped between the two collectors of the upper transistors ($T_1$, $T_5$) of the signal and reference branches (1, 3), which are each connected to the upper potential ($V_{DD}$) via a load resistor ($R_{L1}$, $R_{L2}$).

**Revendications**

1. Circuit de réception à impédance d'entrée constante qui comporte, un transistor supérieur (T1, M1) fonctionnant en connexion en base commune ou connexion en grille commune, une résistance de charge ($R_L$) placée entre son collecteur ou son électrode de transistor à effet de champ correspondante et un potentiel supérieur ($V_{DD}$) pour générer un signal de sortie ($U_{OUT1}$, $U_{OUT}$), et un transistor inférieur (T2, M2), où la section émetteur-collecteur ou la section source-drain du transistor inférieur (T2, M2) est placée entre le transistor supérieur (T1, M1) et un potentiel inférieur (GND), et l'entrée des signaux ($I_{IN}$) du circuit de réception est montée sur l'émetteur ou l'électrode de transistor à effet de champ correspondante du transistor supérieur (T1, M1) alimenté en tension de base constante ou en tension de grille constante, **caractérisé en ce que** les deux transistors (T1, T2 ; M1, M2) sont identiques et le second transistor (T2, M2) est monté en tant que diode.

2. Circuit selon la revendication 1, **caractérisé en ce que** deux résistances de contre-réaction (R1, R2) sont montées entre le transistor supérieur et le transistor inférieur (T1, M1 ; T2, M2), où l'entrée des signaux ($I_{IN}$) se situe entre les résistances de contre-réaction (R1, R2).

3. Circuit selon la revendication 2, **caractérisé en ce que** la série du second transistor (T2, M2) et de la seconde résistance de contre-réaction (R2) est permutée.

4. Circuit selon la revendication 3, **caractérisé en ce que** le circuit comporte au niveau de sa branche de signal (1) une branche de réflexion (2) conforme au principe de réflexion du courant, qui constitue, avec un transistor supérieur et un transistor inférieur (T3, M3 ; T4, M4) et deux résistances de contre-réaction (R3, R4), une copie de circuit de la branche de signal (1), et dans laquelle un courant de repos constant ($I_0$) est appliqué pour stabiliser la tension de base ou la tension de grille du transistor supérieur (T1, M1).

5. Circuit selon l'une des revendications 2 à 4, **caractérisé en ce que** lors d'une utilisation de transistors bipolaires (T1, T2), les résistances de contre-réaction (R1, R2) sont de même valeur.

6. Circuit selon l'une des revendications 2 à 4, **caractérisé en ce que** les deux résistances de contre-réaction (R1, R2) se différencient l'une de l'autre par leur valeur.

7. Circuit selon la revendication 5 ou 6, **caractérisé en ce que** la résistance de contre-réaction (R1) représente environ 2/3 de l'impédance d'entrée ($R_{IN}$).

8. Circuit selon l'une des revendications 5 à 7, **caractérisé en ce que** le courant de repos ($I_0$) est produit par une source de courant "PTAT", de sorte que le courant de repos ($I_0$) soit proportionnel à la température absolue.

9. Circuit selon la revendication 2, **caractérisé en ce que** lors de l'utilisation de transistors MOS (M1, M2), les résistances de contre-réaction (R1, R2) peuvent être supprimées.

10. Circuit selon la revendication 9, **caractérisé en ce que** le circuit comporte un amplificateur supplémentaire (4) avec une résistance de référence ($R_{REF}$) et une tension de référence ($U_{REF}$), qui régule le courant de repos ($I_0$) de sorte que l'équation

$$U_0 = U_{REF} + R_{REF} \times I_0$$

s'applique.

11. Circuit selon la revendication 10, **caractérisé en ce que** l'amplificateur supplémentaire (4) comporte un amplificateur différentiel (5).

12. Circuit selon l'une des revendications mentionnées ci-dessus, **caractérisé en ce qu'**une autre copie de la branche de signal (1) est placée en tant que branche de référence (3) entre la branche de signal (1) et la branche de réflexion (2), qui se compose de deux autres transistors (T5, T6) et de deux résistances (R5, R6) placées entre ces transistors (T5, T6), où la base du transistor supérieur (T5) de la branche de référence (3) est maintenue à une tension constante et le signal de sortie ($U_{OUT}$) est extrait entre les deux collecteurs des transistors supérieurs (T1, T5) des branches de signal et de référence (1, 3) qui sont placés à chaque fois sur le potentiel supérieur ($V_{DD}$) via une résistance de charge ($R_{L1}$, $R_{L2}$).

**Fig.1**

**Fig.2**

**Fig.3**

**Fig.4**

**Fig.5**

**Fig.6**